# EUROPEAN PATENT SPECIFICATION

(11) **EP 1 674 596 B1**
(45) Date of publication and mention of the grant of the patent: **16.02.2011**
(21) Application number: 05257798.8
(22) Date of filing: 19.12.2005
(51) Int. Cl.: C23C 24/04

(54) **Laser enhancements of cold sprayed deposits**
Laserstrahlveredelungen von kaltgasgespritzten Abscheidungen
Dépôts de projection à froid amélioré par laser

(30) Priority: 21.12.2004 US 19751
(43) Date of publication of application: 28.06.2006
(73) Proprietor: United Technologies Corporation, Hartford, CT 06101 (US)
(72) Inventor: DeBiccari, Andrew, North Brandford, CT 06471 (US); Haynes, Jeffrey D., Stuart, FL 33496 (US)
(74) Representative: Leckey, David Herbert

(56) References cited:
- EP-A- 1 418 013
- EP-A- 1 634 976
- WO-A-03/039407
- US-A- 5 302 414
- MORIMOTO J ET AL: "Improvement of solid cold sprayed TiO2-Zn coating with direct diode laser" VACUUM ELSEVIER UK, vol. 73, no. 3-4, 19 April 2004 (2004-04-19), pages 527-532, XP002373228 ISSN: 0042-207X
- VAN STEENKISTE T H ET AL: "Aluminum coatings via kinetic spray with relatively large powder particles" SURFACE & COATINGS TECHNOLOGY ELSEVIER SWITZERLAND, vol. 154, no. 2-3, 15 May 2002 (2002-05-15), pages 237-252, XP002373243 ISSN: 0257-8972

## Description

### BACKGROUND OF THE INVENTION

### (1) Field of the Invention

The present invention relates to a process and an apparatus for applying localized improvements to cold sprayed deposited materials.

### (2) Prior Art

Cold gas dynamic spraying or "cold spray" has been recently introduced as a new metallization spray technique to deposit powder metal with or without inclusions onto a substrate. A supersonic jet of helium and/or nitrogen is formed by a converging/diverging nozzle and is used to accelerate the powder particles toward the substrate to produce cold spray deposits or coatings. Deposits adhere to the substrate and previously deposited layers through plastic deformation and bonding. U.S. Patent Nos. 5,302,414 and 6,502,767 illustrate cold gas dynamic spraying techniques.

Despite the existence of cold spray techniques improvements are needed.

WO 03/039407 A2 discloses a method of manufacturing a stent in which a radio opaque powder is applied to a surface and laser light applied to the surface such that the surface melts to incorporate the powder. EP 1418013 discloses a method of producing a porous surface in which a powder layer is applied to a surface using a cold gas dynamic spraying process and the surface then melted to produce porosity in the surface. US 5302414 discloses a gas dynamic spraying method. Morimoto et al "Improvement of solid cold sprayed TiO2-Zn coating with direct diode laser" Vacuum Elsevier UK, vol. 73, no. 3-4, 19 April 2004, pages 527-532 is a document which discloses laser treatment of a TiO₂-Zn coating. EP-A-1634976, which is prior art under Art. 54(3) EPC discloses heat treatment of a coating deposited on a gas turbine component.

### SUMMARY OF THE INVENTION

Accordingly, it is an object of the present invention to provide a process which improves the density of deposited materials and/or raise the coating temperature.

The foregoing objects may be attained using the process of the present invention.

In accordance with the present invention, there is provided a process for depositing a powder metal onto a substrate as claimed in claim 1.

Other details of the laser enhancements of cold sprayed deposits of the present invention, as well as other means attendant thereto, are set forth in the following detailed description and the accompanying drawings wherein like reference numerals depict like elements.

### BRIEF DESCRIPTION OF THE DRAWINGS

FIG. 1 is a schematic representation of an apparatus for depositing cold sprayed powder metal materials onto a substrate; and
FIG. 2 is a schematic representation of an alternative embodiment of an apparatus for depositing cold sprayed powder metal materials onto a substrate.

### ) DETAILED DESCRIPTION OF THE PREFERRED EMBODIMENT(S)

The present invention relates to a process for applying localized improvements to cold sprayed deposited materials. The localized improvements are density increase and raising the temperature of the deposited material high enough for short durations to recover ductility without significant heat input to the substrate material or any underlying prior cold sprayed deposits.

The essential features of the process are defined in claim 1. Preferred embodiments are defined in claims 2 to 17.

The cold spray process for depositing powder metal materials onto substrates is advantageous in that it provides sufficient energy to accelerate particles to high enough velocities such that, upon impact, the particles plastically deform and bond to the surface of the substrate or onto a previously deposited layer. The process allows the build up of a relative dense coating or structural deposit. Cold spray does not metallurgically transform the particles from their solid state.

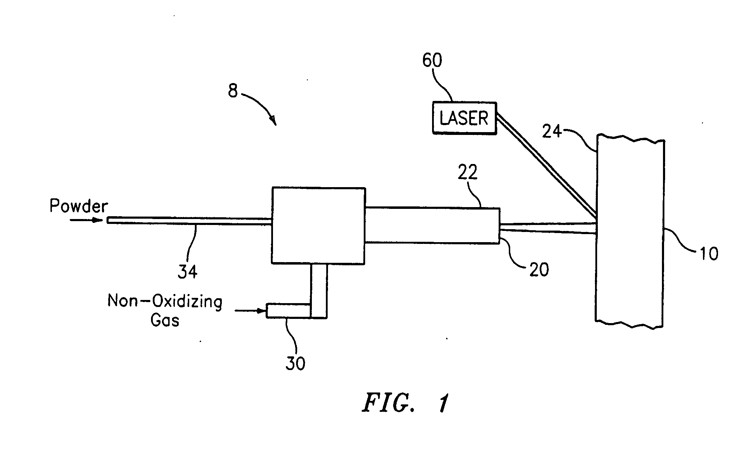

Referring now to FIG. 1, there is shown a system 8 for depositing a powder metal material onto a substrate. The system 8 includes a spray gun 22 having a converging/diverging nozzle 20 through which the powder metal material is sprayed onto a surface 24 of a substrate 10. The substrate 10 could be a part or component for an engine or for any other structure and may be formed from any suitable metallic material known in the art. The substrate 10 may be held stationary or may be articulated, rotated, or translated by any suitable means (not shown) known in the art.

The powdered metal material may be of the same composition as the substrate 10 is made from or it may be a compatible composition. For example, the powder metal material may be a nickel based alloy such as IN 718^{®}, IN 625^{®}, IN 100^{®}, WASPALOY^{®}, IN 939^{®}, or GATORIZED WASPALO^{®}. The powder metal material may also be a copper based alloy or an aluminum based alloy. The powdered metal materials that are used to form the deposit on the surface 24 have a diameter in the range of from 5.0 µm to 50 µm (0.2 mils to 2.0 mils). Smaller particle sizes enable the achievement of higher particle velocities. Below 5 microns in diameter, the particles risk getting swept away from the surface 24 due to a bow shock layer above the surface 24, i.e. insufficient mass to propel the particle through the bow shock. The narrower the particle size distribution, the more uniform the particle velocity will be. This is because the smaller particles in the spray/plume will hit the slower, larger ones and effectively reduce the velocity of both.

The particles to be deposited may be accelerated to supersonic velocities using compressed gas, such as a gas selected from the group consisting of helium, nitrogen, another inert gas, and mixtures thereof. Helium is a preferred gas because it produces the highest velocity due to its low molecular weight.

The bonding mechanism employed by the process of the present invention for transforming the powdered metal material into a deposit is strictly solid state, meaning that the particles plastically deform but do not melt. Any oxide layer that is formed on the particles, or is present on the surface 24, or is present in a previously deposited layer, is broken up and fresh metal-to-metal contact is made at very high pressures.

The powdered metal material used to form the deposit may be fed to the spray gun 22 using any suitable means known in the art, such as modified thermal spray feeders. One custom designed feeder that may be used is manufactured by Powder Feed Dynamics of Cleveland, Ohio. This feeder has an auger type feed mechanism. Fluidized bed feeders and barrel roll feeders with an angular slit may also be used.

In the process of the present invention, the feeders may be pressurized with a gas selected from the group consisting of helium, nitrogen, another inert gas, and mixtures thereof. Feeder pressures are generally 15 psi (103 kPa) above the main gas or head pressures, which pressures are usually in the range of from 200 psi (1.38 mPa) to 500 psi (3.45 MPa), depending on the powder metal material composition. The main gas is preferably heated so that gas temperatures are in the range of from 600 degrees Fahrenheit (316°C) to 1200 degrees Fahrenheit (649°C). If desired, the main gas may be heated as high as approximately 1250 degrees Fahrenheit (677°C) depending on the material being deposited. The gas may be heated to keep it from rapidly cooling and freezing once it expands past the throat of nozzle 20. The net effect is a surface temperature on the substrate 10 of about 115 degrees Fahrenheit (46°C) during deposition. Any suitable means known in the art may be used to heat the gas.

To deposit the powdered metal material, the nozzle 20 may pass over the surface 24 of the substrate 10 being repaired on multiple occasions. The number of passes is a function of the thickness of the material to be applied. The process of the present invention is capable of forming a deposit having any desired thickness. Cold spray can produce thin layers ranging from 0.002 inches (0.051 mm)to 0.020 inches (0.51 mm) per single pass.

The main gas that is used to deposit the powdered metal particles onto the surface 24 may be passed through the nozzle 20 via inlet 30 at a flow rate of from 0.001 SCFM 1 SCFM = 28.317 standard liter per minute (slm) to 50 SCFM, preferably in the range of from 15 SCFM to 35 SCFM. The foregoing flow rates are preferred if helium is used as the main gas. If nitrogen is used by itself or in combination with helium as the main gas, the nitrogen may be passed through the nozzle 20 at a flow rate of from 0.001 SCFM to 30 SCFM, preferably from 4.0 SCFM to 30 SCFM, more preferably 4.0 SCFM to 8.0 SCFM.

The main gas temperature may be in the range of from 600 degrees Fahrenheit (316°C) to 1200 degrees Fahrenheit (649°C), preferably from 700 degrees Fahrenheit (371°C) to 1000 degrees Fahrenheit (538°C), and most preferably from 725 degrees Fahrenheit (385°C) to 900 degrees Fahrenheit (482°C).

The pressure of the spray gun 22 may be in the range of from 200 psi (1.38 MPa) to 500 psi (3.45 MPa), preferably from 200 psi (1.38 MPa) to 400 psi (2.76 MPa), and most preferably from 275 psi (1.90 MPa) to 375 psi (2.59 MPa). The powdered metal material is preferably fed from a hopper, which is under a pressure of 10 psi (69 kPa) to 50 psi (345 kPa) higher than the specific main gas pressure, preferably 15 psi (103 kPa) higher, to the spray gun 22 via line 34 at a rate in the range of from 10 grams/min to 100 grams/min, preferably from 15 grams/min to 50 grams/min.

The powdered metal material is fed to the spray gun 22 using a non-oxidizing carrier gas. The carrier gas may be introduced via inlet 30 at a flow rate of from 0.001 SCFM to 50 SCFM, preferably from 8.0 SCFM to 15 SCFM. The foregoing flow rate is useful if helium is used as the carrier gas. If nitrogen by itself or mixed with helium is used as the carrier gas, a flow rate of from 0.001 SCFM to 30 SCFM, preferably from 4.0 to 10 SCFM, may be used.

The spray nozzle 20 is held at a distance from the surface 24. This distance is known as the spray distance and may be in the range of from 10 mm. to 50 mm.

The velocity of the powdered metal particles leaving the spray nozzle 20 may be in the range of from 825 m/s to 1400 m/s, preferably from 850 m/s to 1200 m/s.

As mentioned before, the powdered metal material may be deposited onto the surface 24 so as to form a coating having one or more layers. It has been discovered that the deposited layer(s) could receive localized improvements from laser processing. With proper settings, a laser could be passed directly over a deposited layer to improve density (sintering) and/or raise the coating temperature high enough, for a short duration, to recover ductility without significant heat input to the substrate material or underlying prior cold sprayed layer (small thermal gradient). To this end, the system 8 includes a laser 60 which may be movable to allow the laser beam to apply heat to the entire powder metal material deposit. The laser 60 may comprise any suitable laser known in the art such as a YAG laser. The laser processing may be performed after each successive cold sprayed layer deposit.

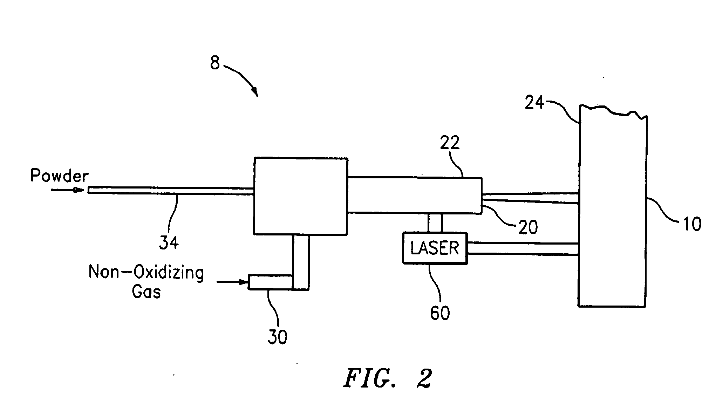

As shown in FIG. 2, the laser 60 may be mounted to the nozzle 20 if desired so that the laser 60 moves with the nozzle 20. Such a laser would track along the spray beam while locally enhancing the deposit (in situ heat treatment).

Cold spray coatings are highly cold worked due to the extreme impact velocity and the nature of the bonding mechanism. This degree of cold work results in very low tensile ductility of the deposited material. Also, some high hardness materials produce fairly porous deposits even at the highest possible spray parameters. The use of the laser 60 helps improve the ductility of the deposited material. It also increases the density or reduces the porosity of deposited material.

The cold spray process offers many advantages over other metallization processes. Since the powders are not heated to high temperatures, no oxidation, decomposition, or other degradation of the feedstock materials occurs. Powder oxidation during deposition is also controlled since the particles are contained within the oxygen-free accelerating gas stream. Other potential advantages include the formation of compressive residual surface stresses and retaining the microstructure of the feedstock. Also, because relatively low temperatures are used, thermal distortion of the substrate will be minimized. Because the feedstock is not melted, cold spray offers the ability to deposit materials that cannot be sprayed conventionally due to the formation of brittle intermetallics or a propensity to crack upon cooling or during subsequent heat treatments.

It is apparent that there has been provided in accordance with the present invention laser enhancements of cold sprayed deposits which fully satisfy the objects, means, and advantages set forth hereinbefore. While the present invention has been described in the context of specific embodiments thereof, other alternatives, modifications, and variations will become apparent to those skilled in the art having read the foregoing description. Therefore, it is intended to embrace those alternatives, modifications, and variations which fall within the scope of the appended claims.

## Claims

1. A process for depositing a powder nickel based alloy, copper based alloy or aluminum based alloy onto a substrate (10) comprising the steps of:
providing a substrate (10);
cold spray depositing at least one layer of said powder alloy onto a surface (24) of said substrate (10) using a non-oxidizing carrier gas so that said powder metal plastically deforms without melting and bonds to a surface upon impact with said surface (24);
said depositing step comprising providing said powder alloy in particle form having a particle size in the range of from 5 µm to 50 µm to a convergent-divergent spray nozzle (20) at a feed rate of from 10 grams/min to 100 grams/min using a carrier gas selected from the group consisting of helium, nitrogen, another inert gas, and mixtures thereof; and
subjecting said at least one powder alloy deposited layer to a laser treatment to increase density and raise the temperature of said at least one powder alloy deposited layer so as to recover ductility without significant heat input to the substrate material.

2. The process according to claim 1, wherein said depositing step comprises depositing multiple layers of said powder alloy.

3. The process according to claim 2, wherein said subjecting step is performed after each said layer is deposited.

4. The process according to claim 1, wherein said depositing step comprises depositing multiple layers of said powder alloy and said subjecting step is performed after said multiple layers have been deposited.

5. The process according to any preceding claim, comprising accelerating said particles to a speed in the range of from 825 m/s to 1400 m/s.

6. The process according to claim 5, wherein said feeding step comprises feeding said alloy powder to said spray nozzle (20) at a feed rate of from 15 grams/min to 50 grams/min and wherein said carrier gas is helium and said feeding step comprises feeding helium to said nozzle at a flow rate of from 0.028 to 1415.85 slm (standard liter per minute) (0.001 SCFM to 50 SCFM).

7. The process according to claim 6, wherein said feeding step comprises feeding said helium to said nozzle at a flow rate in the range of from 226.54 to 424.76 slm (8.0 SCFM to 15 SCFM).

8. The process according to claim 5, wherein said carrier gas comprises nitrogen and said feeding step comprises feeding said nitrogen to said nozzle at a flow rate of from 0.028 to 849.51 slm (0.001 SCFM to 30 SCFM).

9. The process according to claim 8, wherein said feeding step comprises feeding said nitrogen to said nozzle at a flow rate of from 113.27 to 283.17 slm (4.0 SCFM to 10 SCFM).

10. The process according to any of claims 5 to 9, wherein said depositing step comprises passing said alloy powder particles through said nozzle (20) using a main gas selected from the group consisting of helium, nitrogen, another inert gas, and mixtures thereof at a main gas temperature in the range of from 600 degrees Fahrenheit (316°C) to 1200 degrees Fahrenheit (649°C) and at a spray pressure in the range of from 200 psi (1.38 MPa) to 500 psi (3.45 MPa).

11. The process according to claim 10, wherein said passing step comprising passing said alloy powder particles through said nozzle at a main gas temperature in the range of from 700 degrees Fahrenheit (371°C) to 1000 degrees Fahrenheit (538°C) at a spray pressure in the range of from 200 psi (1.38 MPa) to 400 psi (2.76 MPa).

12. The process according to claim 10, wherein said main gas temperature is in the range of from 725 degrees Fahrenheit (385°C) to 900 degrees Fahrenheit (482°C) at a spray pressure in the range of from 275 psi (1.90 MPa) to 375 psi (2.59 MPa).

13. The process according to claim 10, 11 or 12 wherein said main gas comprises helium and said passing step comprises feeding said helium to said nozzle at a flow rate in the range of from 0.028 to 1415.85 slm (0.001 SCFM to 50 SCFM).

14. The process according to claim 13, wherein said helium feeding step comprises feeding said helium to said nozzle at a flow rate in the range of from 424.76 to 991.1 slm (15 SCFM to 35 SCFM).

15. The process according to claim 10, 11 or 12 wherein said main gas comprises nitrogen and said passing step comprises feeding said nitrogen to said nozzle at a feed rate in the range of from 0.028 to 849.51 slm (0.001 SCFM to 30 SCFM).

16. The process according to claim 15, wherein said nitrogen feeding step comprises feeding said nitrogen to said nozzle at a feed rate in the range of from 113.27 to 226.54 slm (4.0 to 8.0 SCFM).

17. The process according to any preceding claim, wherein said depositing step comprises depositing each layer at a thickness of from 0.002 inches (0.051 mm) to 0.020 inches (0.51 mm).

## Patentansprüche

1. Verfahren zum Auftragen eines Pulvers aus einer Legierung auf Nickelbasis, einer Legierung auf Kupferbasis oder einer Legierung auf Aluminiumbasis auf ein Substrat (10), folgende Schritte aufweisend:
Bereitstellen eines Substrats (10);
Auftragen durch Kaltspritzen mindestens einer Schicht des Legierungspulvers auf eine Oberfläche (24) des Substrats (10) unter Verwendung eines nicht-oxidierenden Trägergases, so dass sich das Metallpulver plastisch verformt ohne zu schmelzen und sich beim Auftreffen auf die Oberfläche (24) mit der Oberfläche verbindet;
wobei der Schritt des Auftragens ein Zuführen des Legierungspulvers in Partikelform mit einer Partikelgröße in dem Bereich von 5 µm bis 50 µm zu einer konvergentdivergenten Spritzdüse (20) mit einer Einspeisegeschwindigkeit von 10 Gramm/Min bis 100 Gramm/Min unter Verwendung eines Trägergases, das ausgewählt wird aus der Gruppe, die aus Helium, Stickstoff, einem anderen inerten Gas und Gemischen davon besteht, aufweist; und
Unterziehen der mindestens einen Schicht aus aufgetragenem Legierungspulver einer Laserbehandlung, um die Dichte der mindestens einen Schicht aus aufgetragenem Legierungspulver zu erhöhen und ihre Temperatur zu erhöhen, um ohne signifikante Wärmezufuhr zu dem Substratmaterial Duktilität wieder zu erlangen.

2. Verfahren nach Anspruch 1, bei dem der Schritt des Auftragens ein Auftragen mehrerer Schichten des Legierungspulvers aufweist.

3. Verfahren nach Anspruch 2, bei dem der Schritt des Unterziehens jeweils durchgeführt wird, nachdem eine Schicht aufgetragen ist.

4. Verfahren nach Anspruch 1, bei dem der Schritt des Auftragens ein Auftragen von mehreren Schichten des Legierungspulvers aufweist und der Schritt des Unterziehens durchgeführt wird, nachdem die mehreren Schichten aufgetragen wurden.

5. Verfahren nach einem vorangehenden Anspruch, aufweisend ein Beschleunigen der Partikel auf eine Geschwindigkeit in dem Bereich von 825 m/s bis 1400 m/s.

6. Verfahren nach Anspruch 5, bei dem der Schritt des Einspeisens ein Einspeisen des Legierungspulvers in die Spritzdüse (20) mit einer Einspeisegeschwindigkeit von 15 Gramm/Min bis 50 Gramm/Min aufweist, und bei dem das Trägergas Helium ist und der Schritt des Einspeisens ein Einspeisen von Helium in die Düse mit einer Strömungsgeschwindigkeit von 0,028 bis 1415,85 slm (Standardliter pro Minute) (0,001 SCFM bis 50 SCFM) aufweist.

7. Verfahren nach Anspruch 6, bei dem der Schritt des Einspeisens ein Einspeisen des Heliums in die Düse mit einer Strömungsgeschwindigkeit in dem Bereich von 226,54 bis 424, 76 slm (8,0 SCFM bis 15 SCFM) aufweist.

8. Verfahren nach Anspruch 5, bei dem das Trägergas Stickstoff aufweist und der Schritt des Einspeisens ein Einspeisen des Stickstoffs in die Düse mit einer Strömungsgeschwindigkeit von 0,028 bis 849,51 slm (0,001 SCFM bis 30 SCFM) aufweist.

9. Verfahren nach Anspruch 8, bei dem der Schritt des Einspeisens ein Einspeisen des Stickstoffs in die Düse mit einer Strömungsgeschwindigkeit von 113,27 bis 283,17 slm (4,0 SCFM bis 10 SCFM) aufweist.

10. Verfahren nach einem der Ansprüche 5 bis 9, bei dem der Schritt des Auftragens ein Hindurchführen der Partikel aus Legierungspulver durch die Düse (20) unter Verwendung eines Hauptgases, das ausgewählt wird aus der Gruppe, die aus Helium, Stickstoff, einem anderen inerten Gas und Gemischen davon besteht, bei einer Hauptgastemperatur in dem Bereich von 600 Grad Fahrenheit (316 °C) bis 1200 Grad Fahrenheit (649 °C) und bei einem Spritzdruck in dem Bereich von 200 psi (1,38 MPa) bis 500 psi (3,45 MPa) aufweist.

11. Verfahren nach Anspruch 10, bei dem der Schritt des Hindurchführens ein Hindurchführen der Partikel aus Legierungspulver durch die Düse bei einer Hauptgastemperatur in dem Bereich von 700 Grad Fahrenheit (371 °C) bis 1000 Grad Fahrenheit (538 °C) bei einem Spritzdruck in dem Bereich von 200 psi (1,38 MPa) bis 400 psi (2,76 PMa) aufweist.

12. Verfahren nach Anspruch 10, bei dem die Hauptgastemperatur in dem Bereich von 725 Grad Fahrenheit (385 °C) bis 900 Grad Fahrenheit (482 °C) ist bei einem Spritzdruck in dem Bereich von 275 psi (1,90 MPa) bis 375 psi (2,59 MPa).

13. Verfahren nach Anspruch 10, 11 oder 12, bei dem das Hauptgas Helium aufweist und der Schritt des Hindurchführen ein Einspeisen des Heliums in die Düse mit einer Strömungsgeschwindigkeit in dem Bereich von 0,028 bis 1415,85 slm (0,001 SCFM bis 50 SCFM) aufweist.

14. Verfahren nach Anspruch 13, bei dem der Schritt des Einspeisens von Helium ein Einspeisen des Heliums in die Düse bei einer Strömungsgeschwindigkeit in dem Bereich von 424,76 bis 991,1 slm (15 SCFM bis 35 SCFM) aufweist.

15. Verfahren nach Anspruch 10, 11 oder 12, bei dem das Hauptgas Stickstoff aufweist und der Schritt des Hindurchführens ein Einspeisen des Stickstoffs in die Düse mit einer Einspeisegeschwindigkeit in dem Bereich von 0,028 bis 849,51 slm (0,001 SCFM bis 30 SCFM) aufweist.

16. Verfahren nach Anspruch 15, bei dem der Schritt des Einspeisens von Stickstoff ein Einspeisen des Stickstoffs in die Düse mit einer Einspeisegeschwindigkeit in dem Bereich von 113,27 bis 226,54 slm (4,0 bis 8,0 SCFM) aufweist.

17. Verfahren nach einem vorangehenden Anspruch, bei dem der Schritt des Auftragens ein Auftragen jeder Schicht mit einer Dicke von 0,002 Zoll (0,051 mm) bis 0,020 Zoll (0,51 mm) aufweist.

## Revendications

1. Procédé pour déposer un alliage à base de nickel, un alliage à base de cuivre ou un alliage à base d'aluminium, en poudre, sur un substrat (10), comprenant les étapes consistant à :
se procurer un substrat (10) ;
déposer par projection à froid au moins une couche dudit alliage en poudre sur une surface (24) dudit substrat (10) en utilisant un gaz vecteur non oxydant de telle sorte que ledit métal en poudre se déforme plastiquement sans fondre et se lie à une surface lors de l'impact avec ladite surface (24) ;
ladite étape de dépôt comprenant l'alimentation, avec ledit alliage en poudre sous forme de particules ayant une taille de particules dans la gamme de 5 µm à 50 µm, d'une buse de projection convergente-divergente (20) à une vitesse d'alimentation de 10 g/min à 100 g/min en utilisant un gaz vecteur choisi dans le groupe constitué par l'hélium, l'azote, un autre gaz interne et les mélanges de ceux-ci ; et
soumettre ladite au moins une couche déposée d'alliage en poudre à un traitement par laser pour augmenter la densité ou élever la température de ladite au moins une couche déposée d'alliage en poudre de manière à récupérer de la ductilité sans apport significatif de chaleur au matériau de substrat.

2. Procédé selon la revendication 1, dans lequel ladite étape de dépôt comprend le dépôt de multiples couches dudit alliage en poudre.

3. Procédé selon la revendication 2, dans lequel ladite étape de soumission est exécutée après que chaque dite couche a été déposée.

4. Procédé selon la revendication 1, dans lequel ladite étape de dépôt comprend le dépôt de multiples couches dudit alliage en poudre et ladite étape de soumission est exécutée après que lesdites multiples couches ont été déposées.

5. Procédé selon l'une quelconque des revendications précédentes, comprenant l'accélération desdites particules à une vitesse dans la gamme de 825 m/s à 1400 m/s.

6. Procédé selon la revendication 5, dans lequel ladite étape d'alimentation comprend l'alimentation avec ladite poudre d'alliage de ladite buse de projection (20) à une vitesse d'alimentation de 15 g/min à 50 g/min, et dans lequel ledit gaz vecteur est l'hélium et ladite étape d'alimentation comprend l'introduction d'hélium dans ladite buse à un débit de 0,028 à 1415,85 slm (litres standards par minute) (0,001 SCFM à 50 SCFM).

7. Procédé selon la revendication 6, dans lequel ladite étape d'alimentation comprend l'introduction dudit hélium dans ladite buse à un débit dans la gamme de 226,54 à 424,76 slm (8,0 SCFM à 15 SCFM).

8. Procédé selon la revendication 5, dans lequel ledit gaz vecteur comprend de l'azote et ladite étape d'alimentation comprend l'introduction dudit azote dans ladite buse à un débit de 0,028 à 849,51 slm (0,001 SCFM à 30 SCFM).

9. Procédé selon la revendication 8, dans lequel ladite étape d'alimentation comprend l'introduction dudit azote dans ladite buse à un débit de 113,27 à 283,17 slm (4,0 SCFM à 10 SCFM).

10. Procédé selon l'une quelconque des revendications 5 à 9, dans lequel ladite étape de dépôt comprend le passage desdites particules de poudre d'alliage à travers ladite buse (20) en utilisant un gaz principal choisi dans le groupe constitué par l'hélium, l'azote, un autre gaz inerte et les mélanges de ceux-ci, à une température de gaz principal dans la gamme de 600 degrés Fahrenheit (316 °C) à 1200 degrés Fahrenheit (649 °C) et à une pression de projection dans la gamme de 200 psi (1,38 MPa) à 500 psi (3,45 MPa).

11. Procédé selon la revendication 10, dans lequel ladite étape de passage comprend le passage desdites particules de poudre d'alliage à travers ladite buse à une température de gaz principal dans la gamme de 700 degrés Fahrenheit (371 °C) à 1000 degrés Fahrenheit (538 °C) à une pression de projection dans la gamme de 200 psi (1,38 MPa) à 400 psi (2,76 MPa).

12. Procédé selon la revendication 10, dans lequel ladite température de gaz principal se situe dans la gamme de 725 degrés Fahrenheit (385 °C) à 900 degrés Fahrenheit (482 °C) à une pression de projection dans la gamme de 275 psi (1,90 MPa) à 375 psi (2,59 MPa).

13. Procédé selon la revendication 10, 11 ou 12 dans lequel ledit gaz principal comprend de l'hélium et ladite étape de passage comprend l'introduction dudit hélium dans ladite buse à un débit dans la gamme de 0,028 à 1415,85 slm (0,001 SCFM à 50 SCFM).

14. Procédé selon la revendication 13, dans lequel ladite étape d'introduction d'hélium comprend l'introduction dudit hélium dans ladite buse à un débit dans la gamme de 424,76 à 991,1 slm (15 SCFM à 35 SCFM).

15. Procédé selon la revendication 10, 11 ou 12 dans lequel ledit gaz principal comprend de l'azote et ladite étape de passage comprend l'introduction dudit azote dans ladite buse à un débit dans la gamme de 0,028 à 849,51 slm (0,001 SCFM à 30 SCFM).

16. Procédé selon la revendication 15, dans lequel ladite étape d'introduction d'azote comprend l'introduction dudit azote dans ladite buse à un débit dans la gamme de 113,27 à 226,54 slm (4,0 SCFM à 8,0 SCFM).

17. Procédé selon l'une quelconque des revendications précédentes, dans lequel ladite étape de dépôt comprend le dépôt de chaque couche à une épaisseur de 0,002 pouce (0,051 mm) à 0,020 pouce (0,51 mm).
